Europäisches Patentamt

European Patent Office

Office européen des brevets

(11) Publication number: **0 225 737**
**A2**

(12) # EUROPEAN PATENT APPLICATION

(21) Application number: 86308796.1

(51) Int. Cl.⁴: **G02F 1/01** , G02B 26/00

(22) Date of filing: 12.11.86

(30) Priority: 13.12.85 GB 8530802

(43) Date of publication of application:
16.06.87 Bulletin 87/25

(84) Designated Contracting States:
BE DE FR IT NL

(71) Applicant: STC PLC
10, Maltravers Street
London, WC2R 3HA(GB)

(72) Inventor: King, Jonathan Paul
"Beeches", The Street High Easter
Near Chelmsford Essex CM3 4QS(GB)

(74) Representative: Laurence, Simon French et al
STC Patent Department Edinburgh Way
Harlow Essex CM20 2SH(GB)

(54) Optical state of polorisation modulator.

(57) A tandem pair of two variable birefringence half-wave elements provided with an intervening invariant quarter-wave birefringent element can be used in a polarisation sensitive optical system, such as a coherent light optical fibre reflectometer, for modulating the light in a manner enabling the derivation of a polarisation independent electrical signal from a photodetector.

Fig.1.

## OPTICAL STATE OF POLARISATION MODULATOR

This invention relates to an optical state of polarisation (SOP) modulator and to the use of such a modulator in polarisation sensitive optical systems for the derivation of a detected output signal that is independent of SOP.

For example in an optical heterodyne or homodyne system coherent light from two paths is mixed, and the amplitude of the resulting signal depends in part upon the relative SOP's of the two interfering light beams. This dependence can be inconvenient, particularly if the SOP of one of the interfering beams is unknown. A particular example is to be found for instance in a coherent light optical fibre reflectometer. In such a reflectometer the backscatter signal from the fibre under test is mixed with a local oscillator signal. The SOP of the light from the local oscillator can relatively easily be set to a predetermined state, typically a linearly polarised state of a preferred orientation. However the backscattered light is generally of quite indeterminate SOP. For optimum sensitivity of the reflectometer it would be necessary to ensure that at the mixing point the two signals have the same SOP, but if the SOP of the backscattered light is indeterminate, there is no obvious way of arranging to modify the SOP of the local oscillator output to match it. The modulator of the present invention does not set out to achieve this match, but it does provide a set of outputs that can be manipulated to provide a signal that is independent of the relative SOP's of the backscattered and local oscillator light beams.

According to the present invention there is provided a state of polarisation (SOP) modulator possessing an input and an output port which modulator is operable between a set of states possessing the property that, for any given input SOP to the input port, the output SOP's from the output port form a set whose members, when represented on a Poincaré sphere, sum to the centre of that sphere.

There follows a description of a coherent light optical reflectometer incorporating an optical SOP modulator embodying the invention in a preferred form. The description refers to the accompanying drawings in which:-

Figure 1 is a schematic representation of the reflectometer, and

Figure 2 is a Poincaré sphere diagram used to explain the operation of the SOP modulating element of the reflectometer of Figure 1.

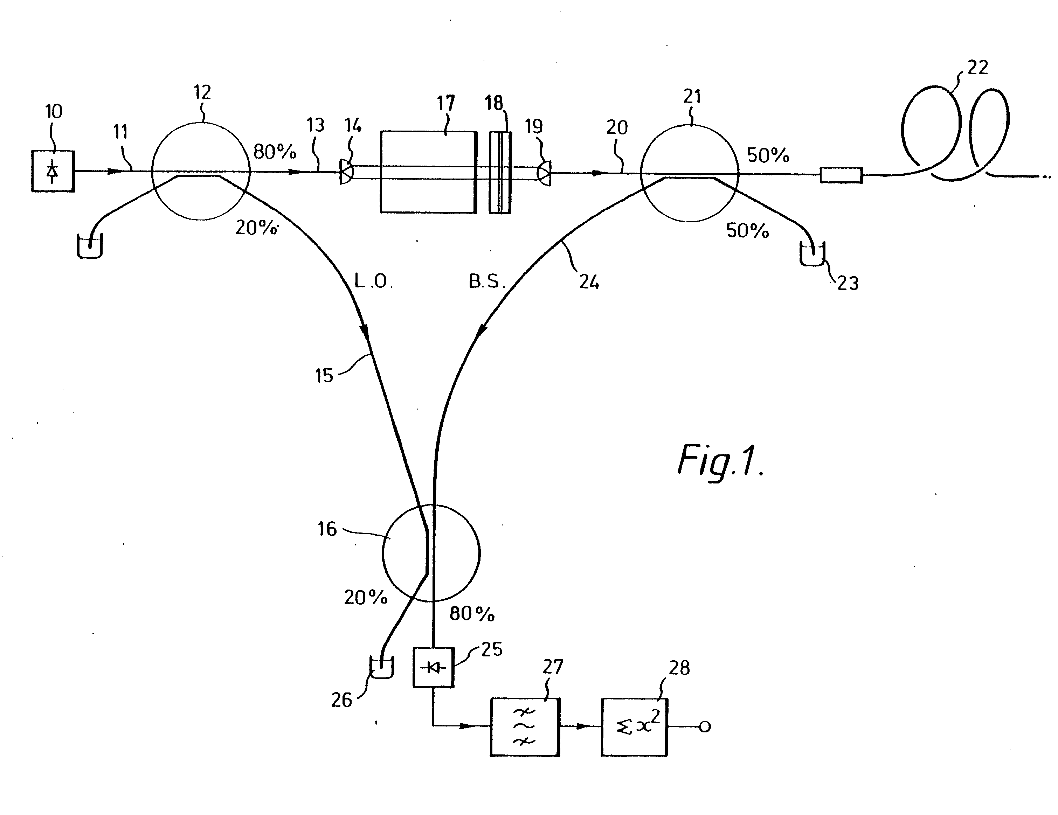

Referring to Figure 1, the light source for a coherent light reflectometer is provided by a laser diode 10. Light from this laser, which may incorporate a length of fibre (not shown) for line narrowing purposes, is fed by a single mode fibre 11 to a fibre directional coupler 12. The construction of the coupler is such as to transmit the majority, typically 80%, of the laser light to a further single mode fibre 13 terminating in an expanded beam collimating lens 14, while the remainder is transmitted via a single mode fibre 15 to a fibre directional coupler 16. Light emerging from the collimating lens passes through a Bragg acousto-optic optical frequency modulator 17 and an SOP optical modulator 18 before being collected by a further collimating lens 19 and launched into a single mode fibre 20. Single mode fibre 20 terminates in a 3 dB fibre directional coupler 21 one output port of which is connected to the fibre under test 22 while the other is connected to a total absorber 23. The 3dB coupler 21 directs half the back scattered light returning from the test fibre 22 into a length of single mode fibre 24 connecting the 3dB coupler 21 with the fibre directional coupler 16. Directional coupler 16 is constructed so that the majority, typically 80%, of the backscattered light in fibre 24 is directed to its output port that terminates in a photodetector 25. The other output port terminates in a total absorber 26. Directional coupler 16 thus acts as an optical heterodyne mixer that mixes backscattered light propagating in fibre 24 with 'local oscillator' light propagating in fibre 15. In one preferred form the SOP modulator 18 consists of a tandem arrangement of two electronically switchable circularly birefringent half-wave elements with an intervening unswitched linearly birefringent quarter-waveplate. This arrangement can be switched between four distinct states comprising neither switchable element energised $S_{oo}$, the first switchable element energised but not the second $S_{10}$, the second switchable element energised but not the first $S_{01}$, and both switchable elements energised $S_{11}$. The photodetector output current is fed via a filter 27 turned to the modulating frequency of the Bragg cell 17, typically 40 MHz, to an arithmetical processing unit 28, whose operation is synchronised with the operation of this SOP modulator 18 to form the sum of the squares of the output currents for each of the four possible states of the modulator. The four output currents represent measurements of optical power received by the photodetector in each of the four states of the modulator, but in some circumstances it is more convenient to measure optical energy rather than optical power, in which case the measurements have to be appropriately weighted to take account of the relative durations of the measurements so as to give equivalent sampling for each state.

Circular birefringence can be electronically produced in an element by means of the application of a magnetic field in the direction of the propagating light (Faraday effect). Electronically switchable circular birefringence is also observable in certain types of liquid crystal cell arrangement, which can thus form an alternative basis for the requisite switchable elements.

The output current of the photodetector 25 is proportional to the scalar product $\bar{E}_{LO} \cdot \bar{E}_{BS}$, where $\bar{E}_{LO}$ is the optical field of the light propagating in fibre 15 (local oscillator), and $\bar{E}_{BS}$ is the optical field of the light propagating in fibre 24 (backscatter).

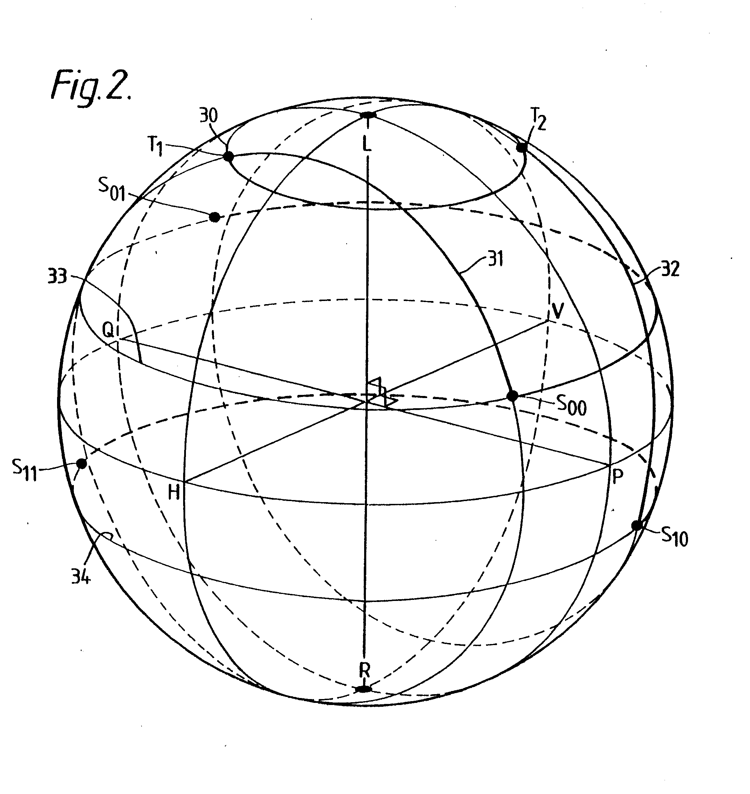

In the case that $\bar{E}_{LO}$ and $\bar{E}_{BS}$ are both linearly polarised, and that the angle between their planes of polarisation is 'A', it is seen that the output current $I$, of the photodetector 25 is given by $I_1 = k.|E_{LO}|. |E_{BS}|. \cos A$. Now, if the plane of polarisation of either one of these fields (but not both) is rotated by 90°, a new value of photodetector output current $I_2$ will result which is given by $I_2 = k . |E_{LO}|.|E_{BS}|. \sin A$. It follows therefore that by squaring and summing the output currents $I_1$ and $I_2$ there is formed an output signal which is independent of the angle 'A'. On the Poincaré sphere - (Figure 2) this rotation by 90° of the plane of polarisation is represented by a rotation of 180° around the equatorial great circle HPVQ of linearly polarised states. These two linearly polarised states 180° apart on the Poincaré sphere sum to the centre of the sphere.

So far it has been shown that if one of the two interfering beams is switched between two linearly polarised states that sum to the centre of the Poincaré sphere, then by summing the squares of the resulting photodetector currents it is possible to derive a signal that is independent of the relative SOP's of the two interfering beams. It will be evident that this is also true if the switched SOP beam is not linearly polarised in either of its two states that sum to the centre of the Poincaré sphere, and it can be shown that the relationship still holds for the more general case of switching between a set of more than two SOP states that satisfy the condition that the members of the set sum to the centre of the sphere.

If light enters the SOP modulator 18 with an indeterminate SOP arbitrary represented by the point T, on the Poincaré sphere of Figure 2, and the switchable elements are constituted by Faraday elements, then, if the first Faraday element is energised to produce half-wave circular birefringence, it emerges from that element with the SOP represented by the point $T_2$, where $T_2$ is diametrically opposite T, on the small circle 30 whose centre lies on the line joining L and R (respectively the left-handed and right-handed circularly polarised states). When the first Faraday element is not energised light will pass normally through it without change of SOP.

The quarter-waveplate of the SOP modulator 18 is an unswitched linearly birefringent element, and hence it rotates the SOP through quarter of a revolution about some axis passing through the centre of the sphere and lying in the equatorial plane of linearly polarised states. The particular direction of the axis depends upon the orientation of the quarter-waveplate, and has been arbitrarily assigned as the direction of the line linking linearly polarised states H and V. Therefore light entering the quarter-waveplate with the SOP defined by the point $T_1$, leaves it with the SOP defined by the point $S_{\infty}$, which is 90° round the small circle 31 that passes through $T_1$ and is centred on the HV axis. Similarly light entering the quarter-waveplate with the SOP defined by the point $T_2$, leaves it with the SOP defined by the points $S_{10}$, which is 90° round the small circle 32 that passes through $T_2$ and is centred on the HV axis. If the second Faraday element is not energised, the SOP remains unchanged on passage through this second element. Hence the output from the SOP modulator 18 will have the SOP defined by the point $S_{\infty}$ if both Faraday elements are unenergised, and the SOP defined by point $S_{10}$ if only the first Faraday element is energised.

If the second Faraday element is energised, the SOP is rotated by a further 180° on its passage through this element. The element is circularly birefringent rather than linearly birefringent, and hence this rotation is about the LR axis rather than the HV axis. If light enters the second element with the SOP defined by point $S_{\infty}$, then, if this element is energised, it will leave it with the SOP defined by point $S_{01}$, where $S_{01}$ is diametrically opposite $S_{\infty}$ on the small circle 33 whose centre lies on the LR axis. Similarly if the light enters the second element with the SOP defined by the point $S_{10}$, then, if this element is energised, it will leave it with the SOP defined by the point $S_{11}$, where $S_{11}$ is diametrically opposite $S_{10}$ on the small circle 34 whose centre lies on the LR axis. Hence the output from the SOP modulator 18 will have the SOP defined by point $S_{11}$ if both Faraday elements are energised, and the SOP defined by the point $S_{01}$ if only the second Faraday element is energised.

Small circles 30, 33 and 34 are all parallels of latitude. Since $T_1$ and $T_2$ are on the same latitude, and 180° degrees apart in longitude, it is clear that the 90° rotation about HV induced by the quarter-wavelength ensures that the parallel of latitude 33 is 'north' of the equatorial plane by the same amount that parallel of latitude 34 is 'south' of it. It is seen therefore that the four points $S_{\infty}$, $S_{01}$, $S_{10}$

and $S_{11}$ sum to the centre of the sphere, and hence the sum of the squares of the corresponding photodetector output currents ($I_{00}$, $I_{01}$, $I_{10}$ and $I_{11}$) is independent of the relative SOP's of the backscattered signal and local oscillator light beams.

In the above-described apparatus the SOP modulator 18 was located in the backscatter arm rather than in the local oscillator arm because it was more convenient having regard to the fact that the particular Bragg modulator already required the provision of an expanded beam. In other circumstances however it might be preferable to locate the SOP modulator element in the local oscillator arm. It is to be understood that this is an acceptable alternative.

The four points $S_{00}$, $S_{01}$, $S_{10}$ and $S_{11}$ that have the property that they sum to the centre of the Poincaré sphere were generated by a 0 or 180° rotation about the LR axis, followed by a 90° rotation about an orthogonal axis (axis HV), and then by a further 0 or 180° rotation about the LR axis. From symmetry considerations it will be evident that a set of four points having this summing to the centre property can be generated by any system affording a 0 or 180° rotation about some arbitrary axis, followed by a 90° rotation about an orthogonal axis, and then a further 0 or 180° rotation about the original arbitrary axis. Particular examples of this are where the two 0 or 180° rotations, are about the HV axis and the intervening 90° rotation is about the LR axis or the PQ axis.

Therefore, the SOP modulator 18, instead of being constituted by two switchable half-wave circularly birefringent elements with an intervening quarter-wave unswitched linearly birefringent element, may for instance alternatively be constituted by two switchable half-wave linearlybirefringent elements with an intervening quarter wave unswitched element. (The reference to half-wave birefringence should, here and elsewhere in this specification be understood to include any birefringence amounting to an odd integral number of half-waves, since in this context these are all equivalent. Similarly, the reference to quarter-wave birefringence should be understood to include any birefringence amounting to an odd integral number of quarter-waves.)

To meet the conditions set out in the preceding paragraph the two switchable linearly birefringent elements have the same orientation, while the unswitched element is either circularly birefringent, or is linearly birefringent with its principle axes inclined at 45° to those of the switchable elements. For some applications these elements may conveniently be fabricated in integrated optics form, using for instance the electro-optic effect in lithium niobate for the linearly birefringent switchable elements. Alternatively, optical effects in liquid crystal layers may be employed.

Referring again to Figure 2, it is seen that the four points $S_{00}$, $S_{01}$, $S_{10}$ and $S_{11}$ can be developed from each other by simple 180° rotations about the orthogonal axis LR and PQ, thus $S_{01}$ and $S_{11}$ map on to $S_{00}$ and $S_{10}$ respectively with a 180° rotation about the LR axis, while $S_{01}$ and $S_{00}$ map on to $S_{11}$ and $S_{10}$ respectively with a 180° rotation about the PQ axis. Therefore, a further way of implementing the SOP modulator 18 is to employ a tandem arrangement of two switchable half-wave birefringent elements having orthogonal rotation axes - (eigen states) on the Poincaré sphere, and no intervening (unswitched) birefringent element. These two switching elements may for instance both be linearly birefringent elements with the principal axes of one inclined at 45° to those of the other. Alternatively, one element, may for instance, be linearly birefringent while the other is circularly birefringent.

In all the foregoing, where a switchable half-wave birefringent element has been called for, such devices have been assumed to be switchable between a state exhibiting no birefringence and a state exhibiting half-wave birefringence. However, it should be appreciated that such a device can be replaced by any device switchable between two states with a nett half-wave difference in birefringence where in neither state is the birefringence zero. A particular example in this class is provided by an element that is switchable between states of positive and negative quarter-wave birefringence.

The invention has been exemplified in the foregoing specific description in relation to an optical heterodyne system, specifically an optical heterodyne system of a coherent reflectometer. It will be evident that heterodyne and homodyne systems are intrinsically polarisation sensitive and hence the invention is more generally applicable. Indeed its application is not limited even to heterodyne and homodyne systems. Thus for instance since a diffraction grating is a polarisation sensitive optical device, if light incident upon such a grating were of indeterminate SOP, and it was desired to derive a polarisation independent signal from the output of a photodetector positioned to receive diffracted light, then this could be achieved with the aid of an SOP modulator of some of the types described above.

In the case of heterodyne and homodyne detection, the squares of the photodetector output currents must be summed, because the output currents are proportional to the backscatter signal field. In the direct detection case, the photodetector produces an output current proportional to the intensity of the signal light, so the signal field is effectively squared at the detector. Thus for polarisation selective direct detection systems, SOP independence is achieved by summing photodetector currents directly, rather the squares of those currents.

## Claims

1. A state of polarisation (SOP) modulator possessing an input port and an output port which modulator is characterised in that it is operable between a set of states possessing the property that, for any given input SOP to the input port, the output SOP's from the output port form a set whose members, when represented on a Poincaré sphere, sum to the centre of that sphere.

2. An SOP modulator as claimed in claim 1, wherein the members of the set number four.

3. An SOP modulator as claimed in claim 2, which modulator includes a tandem arrangement of two variable birefringence elements and an intervening invariant birefringence element, wherein each variable birefringence element is operable between a pair of states affording a nett half-wave change in birefringence, wherein the invariant birefringence element affords a quarter-wave birefringence, and wherein the birefringences of the three elements are such that they are represented on the Poincaré sphere by birefringence axes having the property that those of the two variable elements lie in a common direction to which that of the invariant element is normal..

4. An SOP modulator as claimed in claim 3, wherein the two variable birefringence elements exhibit variable circular birefringence.

5. An SOP modulator as claimed in claim 4, wherein the two variable birefringence elements are constituted by Faraday effect elements.

6. An SOP modulator as claimed in claim 3, wherein the two variable birefringence elements exhibit variable linear birefringence.

7. An SOP modulator as claimed in claim 2, which modulator includes a tandem arrangement of two variable birefringence elements with no intervening birefringence element, wherein each variable birefringence element is operable between a pair of states affording a nett half-wave change in birefringence, and wherein the birefringence elements are such that they are represented on the Poincaré sphere by birefringence axes that are mutually orthogonal.

8. An SOP modulator as claimed in claim 7, wherein the two variable birefringence elements exhibit variable linear birefringence.

9. An SOP modulator as claimed in any claim of claims 3 to 8, wherein each variable birefringence element is constituted by a device operable between a state affording no birefringence and a state affording half-wave birefringence.

10. An optical heterodyne or homodyne system in which there is included in the light path of one of the coherent light beams that are coherently mixed by the system an SOP modulator as claimed in any preceding claim.

11. An reflectometer including an optical system as claimed in claim 10.

Fig.1.

0 225 737

Fig. 2.

0 225 737